# EUROPÄISCHE PATENTSCHRIFT

(11) **EP 1 746 020 B1**
(45) Veröffentlichungstag und Bekanntmachung des Hinweises auf die Patenterteilung: **04.09.2013**
(21) Anmeldenummer: 06014481.3
(22) Anmeldetag: 12.07.2006
(51) Int. Cl.: B62M 9/12

(54) **Gelenkverbindung**
Articulated joint
Joint articulé

(30) Priorität: 22.07.2005 DE 102005034330
(43) Veröffentlichungstag der Anmeldung: 24.01.2007
(73) Patentinhaber: SRAM Deutschland GmbH, 97404 Schweinfurt (DE)
(72) Erfinder: Böhm, Robert, Dipl.-Ing., 97453 Mainberg (DE); Hamisch, Thorsten, 97080 Würzburg (DE); Benz, Andreas, 97453 Mainberg (DE)

(56) Entgegenhaltungen:
- EP-A1- 1 010 613
- EP-A1- 1 357 023
- EP-A2- 1 099 620
- EP-A2- 1 447 317
- WO-A2-94/27008
- GB-A- 988 439

## Beschreibung

Die vorliegende Erfindung betrifft eine Gelenkverbindung an einer Fahrradschaltung zwischen einem Festteil oder einem Umwerferelement und einem Schwenkarm, insbesondere einem Parallelogrammelement eines Kettenumwerfers. Diese Kettenumwerfer umfassen ein mit dem Fahrradrahmen verbundenes Tragteil und ein, die Kette direkt oder indirekt aus ihrer Bahn bewegendes Umwerferelement. Tragteil und Umwerferelement bilden mit zwei Parallelogrammelementen ein Parallelogramm. Die beiden Parallelogrammelemente sind jeweils über Gelenkbolzen mit dem Tragteil und dem Umwerferelement gelenkig verbunden.

In der DE 101 57 213 A1 ist ein hinterer Kettenumwerfer mit einem bolzengelagerten Parallelogrammmechanismus mit einer Gelenkverbindung gemäß dem Oberbegriff des Anspruchs 1 veröffentlicht. Die Anlenkung der Parallelogrammelemente am Tragteil und am Umwerferelement bzw. am Rollenkäfighalter erfolgt durch Einsetzen der Gelenkbolzen in aufeinander abgestimmte, fluchtende Durchgangsbohrungen. Zur axialen Sicherung verfügen die Gelenkbolzen jeweils über eine Nut, in die ein Sicherungsring einschnappen kann, wodurch eine formschlüssige Verbindung entsteht. Der Sicherungsring stützt sich axial in einer Variante am Tragteil bzw. Umwerferelement und am Parallelogrammelement ab. In einer zweiten Variante ist der Sicherungsring in einer entsprechenden Aussparung des Parallelogrammelementes angeordnet, das sich seitlich in einer passgenauen Aussparung des Tragteiles bzw. des Umwerferelementes abstützt.

Diese Gelenkverbindung zwischen Parallelogrammelement und Tragteil bzw. Umwerferelement weist keine definierte Lagerfläche auf, so kann sich der Gelenkbolzen sowohl im Tragteil bzw. Umwerferelement, als auch im Parallelogrammelement verdrehen. Es ist auch keine Abdeckung an beiden Enden des Gelenkbolzens vorhanden, so dass Schmutz und Salz ungehindert zwischen Bolzen und Lagerbohrung eintreten kann.

Aus der WO 94/27008 ist eine Gelenkverbindung an einem Torriegel bekannt. Die EP 1 447 317 zeigt einen vorderen Fahrradkettenwerfer mit weiteren Merkmalen des Oberbegriffs.

Der Erfindung liegt nun die Aufgabe zugrunde, einen hinteren Kettenumwerfer (ein Schaltwerk) mit einer Gelenkverbindung auszustatten, die über eine definierte Lagerfläche und einen maximalen Lagerabstand verfügt. Zudem soll die Lagerung gegen Verschmutzung geschützt und der Gelenkbolzen verliersicher angebracht werden.

Die Aufgabe wird erfindungsgemäß durch die Merkmale des Hauptanspruches gelöst. Weitere vorteilhafte Ausgestaltungen der Erfindung werden in den Unteransprüchen und den nachfolgenden Ausführungsbeispielen beschrieben. Die Aufgabe wird wie folgt gelöst:

Die beiden Gelenkteile, insbesondere das Tragteil und die beiden Parallelogrammelemente bzw. das Umwerferelement und die beiden Parallelogrammelemente werden wie üblich jeweils mit einem Gelenkbolzen verbunden. Im Gegensatz zum Stand der Technik wird die Gelenklagerung genau definiert und möglichst weit nach außen platziert. Hierzu wird eines der beiden Gelenkteile, im Bereich der Gelenklagerung, vom anderen Gelenkteil geführt. Für diese Erfindung ist es unerheblich, ob das Tragteil oder das Parallelogrammelement am Gelenk außen angeordnet ist und das andere auf zwei Seiten umschließt. Um zu gewährfeisten, dass sich der Gelenkbolzen nur im äußeren Gelenkteil drehen kann, wird der Gelenkbolzen kraft-öder formschlüssig im inneren Gelenkteil verdrehfest befestigt. Dies kann mit einer Klemmung, Pressverbindung oder mit Verzahnung bzw. Rändelung bewerkstelligt werden.

Zudem wird vorgeschlagen, den Gelenkbolzen zur Definition der axialen Einbaulage des inneren und äußeren Gelenkteiles und als Verliersicherung für den Gelenkbolzen mit einer axialen Sicherung zu versehen. Die Anordnung des Sicherungselementes, z. B. eines Sicherungsringes, Sprengringes, Splintes oder einer Sicherungsscheibe, das formschlüssig in einer Nut bzw. Bohrung des Gelenkbolzens arretiert wird, verhindert zum einen die axiale Bolzenverschiebung und zum anderen wird damit der Abstand zwischen dem inneren und äußeren Gelenkteil festgelegt. Zur Lagefixierung der Gelenkteile liegt auf der einen Seite der verbreiterte Bolzenkopf am äußeren Gelenkteil an und auf der anderen Seite greift das Sicherungselement in eine Haltekontur, z. B. in Form einer umlaufenden Bolzennut, am Gelenkbolzen an und stützt sich am inneren Gelenkteil ab. Das Sicherungselement wird zwischen den Lagerstellen, im Bereich des inneren Gelenkteiles angeordnet. Die formschlüssige, axiale Arretierung des Gelenkbolzens wird durch den Bolzenkopf und das Sicherungselement in Verbindung mit der Bolzenkontur erzielt. Der Abstand zwischen dem Bolzenkopf und dem Sicherungselement definiert die Lage der dazwischen befindlichen Gelenkteile zueinander bzw. begrenzt deren axiale Verschiebbarkeit. Das Sicherungselement wird nach dem Zusammenstecken der Gelenkteile und des Gelenkbolzens in einer Aussparung am inneren Gelenkteil am Gelenkbolzen montiert. Zum Montieren des Sicherungselementes müssen das innere und äußere Gelenkteil eine definierte Lage bzw. Winkelstellung zueinander einnehmen. Die Aussparung ist während der Montage zugänglich, wird aber später in der Einbaulage der funktionsfähigen Schalteinheit durch das innere Gelenkteil nahezu verdeckt.

In einer bevorzugten Variante der Gelenkverbindung kann das zusätzliche Sicherungsbauteil entfallen. Hierzu wird die axiale Sicherung des Gelenkbolzens durch eine örtliche, irreversible Verformung des inneren Gelenkteiles in Richtung der Haltekontur oder durch ein, am inneren Gelenkteil angeordnetes und in Richtung Haltekontur wirkendes, elastisches Element bewerkstelligt. Dies wird zum einen durch die Bereitstellung eines Verformungsbereiches am inneren Gelenkteil oder zum anderen durch ein am inneren Gelenkteil integriertes Clip-Element ermöglicht. Der Gelenkbolzen wird nach der Montage durch Krafteinwirkung auf den Verformungsbereich des inneren Gelenkteiles geklemmt und axial fixiert. Hierzu wird allerdings ein zusätzlicher Bearbeitungsschritt erforderlich. Dieser kann entfallen, wenn am Ende der Durchgangsbohrung am inneren Gelenkteil ein elastisches Klippelement angeordnet ist, das nach der Montage in eine entsprechende Haltekontur in Form einer umlaufenden Nut am Gelenkbolzen eingreift. An Stelle eines oder mehrerer Klippelemente kann eine axiale Fixierung des Gelenkbolzens auch mit einer örtlichen Verengung der Durchgangsbohrung am Ende des inneren Gelenkteiles oder mit einer entsprechenden örtlichen Vergrößerung des Bolzendurchmessers erzielt werden. Im Zusammenspiel der örtlichen Verengung bzw. Vergrößerung mit der Kontur des entsprechenden benachbarten Bauteiles gelingt eine verliersichere Befestigung des Gelenkbolzens ohne ein zusätzliches Bauteil.

Eine weitere Ausgestaltung der Erfindung sieht vor, die Lagerstellen mit Lagerbuchsen auszustatten. Das gegenüber dem Bolzenkopf befindliche Ende des Gelenkbolzens wird in einem Sackloch des äußeren Gelenkteiles gelagert. Somit wird die Bolzenlagerung insbesondere die Lagerbuchsen auf der einen Seite vom Bolzenkopf und auf der anderen Seite vom Sackloch gegen äußere Umwelteinflüsse abgedeckt. Diese Gelenkausführung, mit den weit auseinanderliegenden Lagerbuchsen bzw. das Kapseln einer Lagerstelle im Sackloch und das Verdecken der anderen Lagerstelle mit dem flachen Bolzenkopf, ergibt eine stabile, spielfreie und wartungsfreie Gelenklagerung und sorgt zudem für ein aufgeräumtes Erscheinungsbild der Schalteinheit. Es werden keine weiteren Komponenten zur Abdichtung gegen Verschmutzung oder zur optischen Abdeckung der Lager- und Sicherungselemente benötigt.

Diese nach außen abgeschirmte Gelenkverbindung zwischen dem Tragteil und dem Parallelogrammelement sowie zwischen dem Umwerferelement und dem Parallelogrammelement findet ihren Einsatz am hinteren Schaltwerk. Dabei ist es unerheblich, ob das äußere Gelenkteil vom Parallelogrammelement oder vom Tragteil bzw. Umwerferelement gebildet wird.

Die Erfindung lässt verschiedene Ausführungsformen zu. Das Grundprinzip und die Funktionsweise werden anhand von bevorzugten Ausführungen der Gelenkverbindung erläutert und mit Bezug auf die beigefügten Zeichnungen detailliert beschrieben, wobei die Zeichnungen lediglich als nicht beschränkendes Beispiel anzusehen sind.
- **Figur 1**: zeigt das Schaltwerk mit den Gelenkbolzen in einer 3 D-Darstellung
- **Figur 2**: zeigt einen Schnitt durch eine Gelenkverbindung
- **Figur 3**: zeigt eine 3 D-Darstellung des Schaltwerkes mit einem Ausschnitt des Gelenkes am Tragteil
- **Figur 4**: zeigt eine 3 D-Darstellung des Schaltwerkes mit einem Ausschnitt des Gelenkes am Umwerferelement

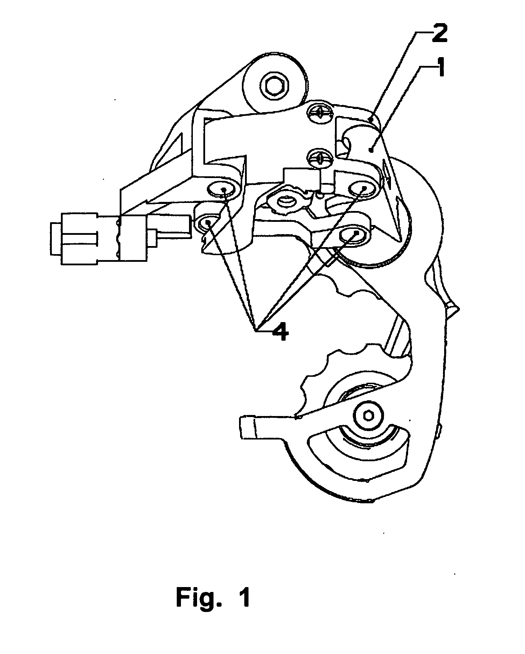

**Figur 1** zeigt ein Schaltwerk mit den vier Gelenkbolzen **4,** die zum einen die zwei Parallelogrammteile mit dem Tragteil und zum anderen die zwei Parallelogrammteile mit dem Umwerferelement gelenkig verbinden. Diese Ausführung zeigt, dass das Parallelogrammteil auf der dem Umwerferelement zugewendeten Seite als äußeres Gelenkteil **2** und auf der anderen Seite als inneres Gelenkteil **1** ausgebildet ist. Das innere Gelenkteil **1** wird vom äußeren Gelenkteil **2** seitlich abgestützt und mit diesem durch einen Gelenkbolzen **4** gelenkig verbunden. Die axiale Sicherung der Gelenkbolzen **4** erfolgt hier im verdeckten Bereich des inneren Gelenkteiles **1,** so dass eine sichtbare Bolzensicherung am Ende der Gelenkbolzen **4** entfällt.

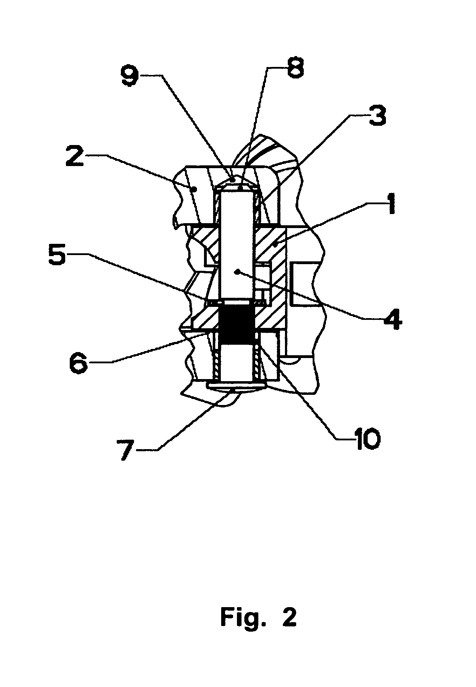

**Figur 2** zeigt eine Schnittdarstellung der Gelenkverbindung mit einem inneren Gelenkteil **1** und einem äußeren Gelenkteil **2** sowie einem mittels Lagerbuchsen **3** im äußeren Gelenkteil **2** gelagerten Gelenkbolzen **4.** Der Gelenkbolzen **4** verfügt über eine Klemmkontur **6** und eine Nut zur axialen Arretierung des Sicherungselementes **5.** Als Sicherungselement **5** kann eine Sicherungsscheibe, ein Sicherungsring oder ein Sprengring eingesetzt werden. An einem Ende trägt der Gelenkbolzens **4** einen flachen Bolzenkopf **7** und am anderen Ende eine Anfasung **8.** Zwischen dem Sicherungselement **5** und dem Bolzenkopf **7** befindet sich eine Lagerstelle im äußeren Gelenkteil **2** mit einer Lagerbuchse **3** sowie die Klemmkontur **6,** die als Rändelung ausgeführt ist. Das Sicherungselement **5** verhindert eine axiale Verschiebung des Gelenkbolzens **4** nach außen und definiert den Abstand zum Bolzenkopf **7** und somit auch die relative Lage des inneren Gelenkteiles **1** zum äußeren Gelenkteil **2.** Bei der Montage der Gelenkverbindung wird eine Lagerbuchse **3** in das Sackloch **9** im äußeren Gelenkteil **2** eingepresst und die andere Lagerbuchse **3** über den Gelenkbolzen **4** bis zum Bolzenkopf **7** aufgeschoben. Die Lagerbuchse **3** kann leichtgängig über die Klemmkontur **6** geschoben werden, da sie anschließend mit dem Gelenkbolzen **4** in das äußere Gelenkteil **2** eingepresst wird und sich dadurch der Innendurchmesser der Lagerbuchse verengt und sich somit eine spielfreie Lagerstelle bildet. Der Gelenkbolzen **4** wird zuerst von außen durch die offene Bohrung im äußeren Gelenkteil **2** und durch die Bohrung im ersten Abschnitt des inneren Gelenkteiles **1** geschoben, dann eventuell durch den Sicherungsring bzw. Sprengring. Eine Sicherungsscheibe kann auch später montiert werden, wenn der Gelenkbolzen **4** durch den zweiten Abschnitt des inneren Gelenkteiles **1** gesteckt und die Lagerbuchse **3,** die sich axial am Bolzenkopf **7** abstützt, in die Durchgangsbohrung **10** am äußeren Gelenkteil **2** eingepresst wurde. Nach der Montage sitzt der Gelenkbolzen **4,** aufgrund der Rändelung oder einer Presspassung zwischen Gelenkbolzen **4** und dem inneren Gelenkteil **1,** fest im inneren Gelenkteil **1** und wird spielfrei in den Lagerbuchsen **3** geführt. Da die Lagerbuchsen **3** mit einem maximalen Abstand voneinander angeordnet sind, ergibt sich eine besonders stabile Gelenkverbindung mit definierten Lagerstellen. Die Kapselung der Lagerbuchsen nach außen durch das Sackloch **9** bzw. dem Bolzenkopf 7 sowie das in der Funktionslage verdeckte Sicherungselement **5** schützen vor Umwelteinflüssen und sorgen für ein aufgeräumtes Erscheinungsbild der Gelenkverbindung bzw. des Schaltwerkes.

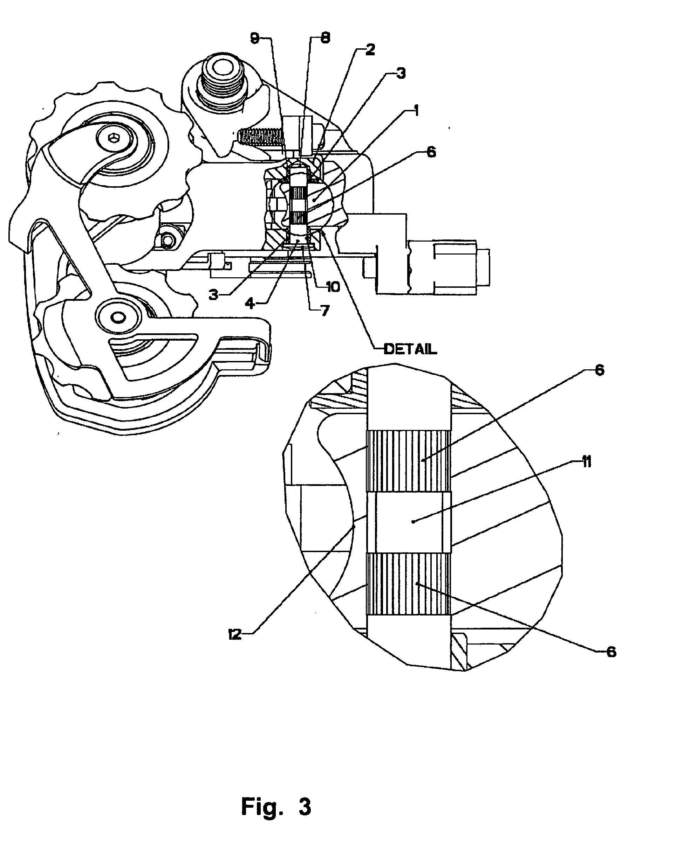

**Figur 3** zeigt eine Darstellung des Schaltwerkes mit einem vergrößerten Ausschnitt des Gelenkes am Tragteil. Hier ist das Tragteil als inneres Gelenkteil **1** und das Parallelogrammteil als äußeres Gelenkteil **2** ausgebildet. Der Gelenkbolzen **4** ist mit einem Bolzenkopf **7,** einer Klemmkontur **6,** und einer zwischen der Rändelung der Klemmkontur **6** liegenden Haltekontur **11** ausgestattet. Am Ende des Gelenkbolzens **4** befindet sich zur Montageerleichterung eine Anfasung **8.** Die Anordnung der Lagerbuchsen **3** an den Enden des Gelenkbolzens **4** ergibt eine stabile definierte Lagerfläche mit einem maximal erzielbaren Lagerabstand. Vor der Montage der Gelenkverbindung wird eine Lagerbuchse **3** in das Sackloch **9** eingelegt und die andere Lagerbuchse **3** bis zum Anschlag am Bolzenkopf **7** auf den Gelenkbolzen **4** geschoben. Eine Beschädigung der Lagerfläche beim Passieren der Rändelung wird durch ein Übermaß der Buchsenbohrung verhindert. Nach dem Einschieben des Gelenkbolzens **4** in die Durchgangsbohrung **10** am äußeren Gelenkteil **2** erleichtert die Anfasung 8 das Einfädeln in die Bohrung am inneren Gelenkteil **1** und in die im Sackloch **9** sitzende Lagerbuchse **3.** Beim Einschieben des Gelenkbolzens **4** stützt sich die Lagerbuchse **3** am Bolzenkopf **7** ab und wird in die Durchgangsbohrung **10** eingepresst, wodurch sich das Sollmaß des Innendurchmessers der Lagerbuchse **3** einstellt. Die Klemmkontur **6** bzw. die Rändelung am Gelenkbolzen **4** sorgt für einen verdrehfesten Sitz des Gelenkbolzens **4** im inneren Gelenkteil **1** und erlaubt somit nur eine definierte Gelenkbewegung in den weit auseinender positionierten Lagerbuchsen. Eine sichere axiale Fixierung des Gelenkbolzens **4** bewirkt eine Verformung des Verformungsbereiches **12** am inneren Gelenkteil **1** in Richtung Gelenkbolzen **4.** Der Verformungsbereich **12** wird dabei in die Haltekontur **11** am Gelenkbolzen **4** gedrückt und führt zu einer formschlüssigen, verliersicheren Verbindung. In dieser Gelenkausführung wird der Bolzenkopf **7** im äußeren Gelenkteil **2** versenkt und deckt somit die Lagerbuchse **3** optimal ab, so dass diese ebenso wie die im Sackloch **9** angeordnete Lagerbuchse **3** gegen Verschmutzung geschützt und abgeschirmt ist.

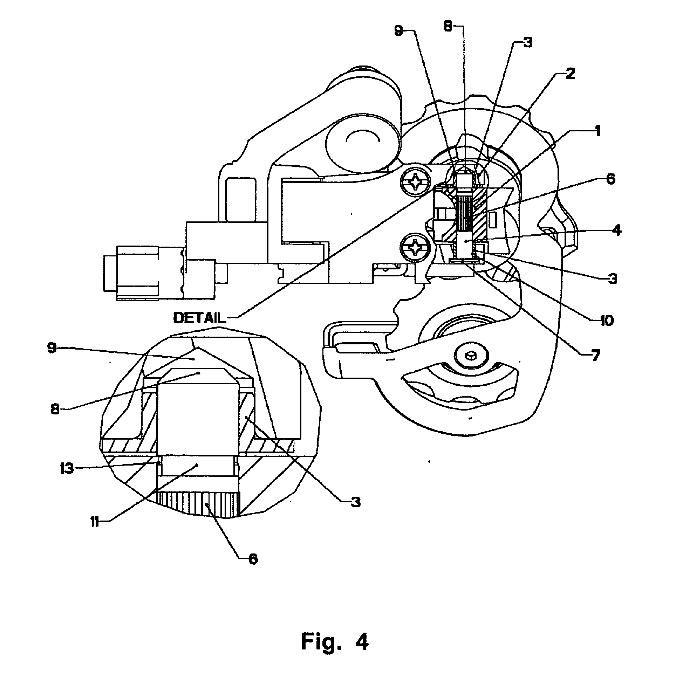

**Figur 4** zeigt eine weitere Darstellung des Schaltwerkes mit einem vergrößerten Ausschnitt der Gelenkverbindung am Umwerferelement. Hier ist das Umwerferelement als inneres Gelenkteil **1** und das Parallelogrammteil als äußeres Gelenkteil **2** ausgebildet. In dieser Ausführung wird die axiale Fixierung des Gelenkbolzens **4** mit einem im inneren Gelenkteil **1** integrierten Clip-Element **13** bewerkstelligt. Dieses Clip-Element **13,** in Form einer nach innen gerichteten Kontur befindet sich auf der einen Seite der Bohrung im inneren Gelenkteil **1.** Das Clip-Element **13** wird beim Einschieben des Gelenkbolzens **4,** unterstützt durch die Anfasung 8, nach außen gedrückt und rastet dann in die Haltekontur **11** am Gelenkbolzen **4** ein. Die Haltekontur **11** in Form einer umlaufenden Nut befindet sich in Einschubrichtung vor der Klemmkontur **6,** damit das Clip-Element nicht von der Klemmkontur beschädigt werden kann. Im Gegensatz zu Figur 3 entfällt bei der Montage der Arbeitsgang zur Verformung des inneren Gelenkteiles **1.** Die Bolzenlagerung mit maximal beabstandeten Lagerbuchsen **3,** die vom Sackloch **9** bzw. von der Durchgangsbohrung **10** aufgenommen werden, wird auf der nach außen offenen Seite vom Bolzenkopf **7** abgedeckt.

### Bezugszeichenliste

- 1: Inneres Gelenkteil
- 2: Äußeres Gelenkteil
- 3: Lagerbuchse
- 4: Gelenkbolzen
- 5: Sicherungselement
- 6: Klemmkontur
- 7: Bolzenkopf
- 8: Anfasung
- 9: Sackloch
- 10: Durchgangsbohrung
- 11: Haltekontur
- 12: Verformungsbereich
- 13: Clip-Element

## Patentansprüche

1. Gelenkverbindung zwischen einem Tragteil oder einem Umwerferelement und einem Parallelogrammelement eines hinteren Schaltwerkes eines Fahrrades, bestehend aus einem inneren Gelenkteil (1), einem äußeren Gelenkteil (2) und einem diese gelenkig verbindenden Gelenkbolzen (4),
**dadurch gekennzeichnet,**
**dass** die Lagerstellen im äußeren Gelenkteil (2) angeordnet sind, wobei sich eine Lagerstelle in einem Sackloch (9) befindet und die andere in einer Durchgangsbohrung (10), die vom Bolzenkopf (7) nach außen abgedeckt wird und dass der Gelenkbolzen (4) über eine Klemmkontur (6) verfügt, die eine drehfeste Verbindung mit dem inneren Gelenkteil (1) gewährleistet.

2. Gelenkverbindung nach Anspruch 1,
**dadurch gekennzeichnet,**
**dass** der Gelenkbolzen (4) an einem Ende mit einem Bolzenkopf (7) und am anderen Ende mit einer Anfasung (8) und im Mittelbereich mit einer Klemmkontur (6) zur Verdrehsicherung sowie einer Haltekontur (11) zur formschlüssigen, axialen Lagefestlegung ausgestattet ist.

3. Gelenkverbindung nach Anspruch 2,
**dadurch gekennzeichnet,**
**dass** an den Lagerstellen Lagerbuchsen (3) im Bereich der Enden der Gelenkbolzen (4) angeordnet sind, wodurch ein maximaler Lagerabstand erzielt wird.

4. Gelenkverbindung nach Anspruch 2,
**dadurch gekennzeichnet,**
**dass** die Klemmkontur (6) am Gelenkbolzen (4) zwischen den Lagerstellen vorzugsweise zwischen dem Bolzenkopf (7) und der Haltekontur (11) angeordnet ist und mit der Klemmkontur (6) eine kraft- oder formschlüssige Verbindung zwischen dem inneren Gelenkteil (1) und dem Gelenkbolzen (4) hergestellt wird.

5. Gelenkverbindung nach Anspruch 1,
**dadurch gekennzeichnet,**
**dass** die Lagerstellen mit Lagerbuchsen (3) ausgestattet sind, die in das Sackloch (9) eingelegt und in die Durchgangsbohrung (10) eingepresst werden.

6. Gelenkverbindung nach Anspruch 5,
**dadurch gekennzeichnet,**
**dass** die Lagerbuchsen (3) nach außen durch das Ende des Sackloches (9) bzw. durch den Bolzenkopf (7) abgedeckt werden.

7. Gelenkverbindung nach Anspruch 2,
**dadurch gekennzeichnet,**
**dass** der Gelenkbolzen (4) mit einem Sicherungselement (5), das in die Haltekontur (11) eingreift, axial fixiert wird, wobei das Sicherungselement (5) zwischen zwei Abschnitten des inneren Gelenkteiles (2) angeordnet ist und dass durch den Abstand des Sicherungselementes (5) zum Bolzenkopf (7) die beiden Abstände zwischen dem äußeren Gelenkteil (2) und dem inneren Gelenkteil (1) festgelegt werden.

8. Gelenkverbindung nach Anspruch 7,
**dadurch gekennzeichnet,**
**dass** das Sicherungselement (5) im Zwischenraum des inneren Gelenkteiles (1) während der Montage zugänglich ist und anschließend in der Funktionsstellung des Kettenumwerfers verdeckt wird.

9. Gelenkverbindung nach Anspruch 2,
**dadurch gekennzeichnet,**
**dass** zur axialen Fixierung des Gelenkbolzens (4) ein entsprechend gestalteter Verformungsbereich (12) am inneren Gelenkteil (1) in Richtung Haltekontur (11) gedrückt wird.

10. Gelenkverbindung nach Anspruch 2,
**dadurch gekennzeichnet,**
**dass** zur axialen Fixierung des Gelenkbolzens (4) ein, mit dem inneren Gelenkteil (1) verbundenes, elastisches Clip-Element (13) in die zwischen der Anfasung (8) und der Klemmkontur (6) am Gelenkbolzen (4) angeordnete Haltekontur (11) einrastet.

11. Gelenkverbindung nach Anspruch 10,
**dadurch gekennzeichnet,**
**dass** das Clip-Element im inneren Gelenkteil (1) integriert ist oder mit diesem ein gemeinsames Bauteil bildet.

## Claims

1. Articulated joint between a supporting part or a dérailleur element and a parallelogram element of a rear gear-changing mechanism of a bicycle, consisting of an inner joint part (1), an outer joint part (2) and a joint pin (4) connecting said joint parts to each other in an articulated manner,
**characterized in that**
the bearing points are arranged in the outer joint part (2), wherein one bearing point is located in a blind hole (9) and the other in a through hole (10) which is covered to the outside by the pin head (7), and **in that** the joint pin (4) has a clamping contour (6) which ensures connection to the inner joint part (1) for conjoint rotation.

2. Articulated joint according to Claim 1,
**characterized in that**
the joint pin (4) is provided at one end with a pin head (7) and at the other end with a bevel (8) and in the central region with a clamping contour (6) for securing against rotation and with a holding contour (11) for the form-fitting, axial fixing in position.

3. Articulated joint according to Claim 2,
**characterized in that**
bearing bushings (3) are arranged on the bearing points in the region of the ends of the joint pins (4), thus obtaining a maximum distance between the bearings.

4. Articulated joint according to Claim 2,
**characterized in that**
the clamping contour (6) is arranged on the joint pin (4) between the bearing points, preferably between the pin head (7) and the retaining contour (11), and a frictional or form-fitting connection between the inner joint part (1) and the joint pin (4) is produced by the clamping contour (6).

5. Articulated joint according to Claim 1,
**characterized in that**
the bearing points are provided with bearing bushings (3) which are placed into the blind hole (9) and are pressed into the through hole (10).

6. Articulated joint according to Claim 5,
**characterized in that**
the bearing bushings (3) are covered to the outside by the end of the blind hole (9) and by the pin head (7).

7. Articulated joint according to Claim 2,
**characterized in that**
the joint pin (4) is fixed axially by a securing element (5) which engages in the holding contour (11), wherein the securing element (5) is arranged between two sections of the inner joint part (1), and **in that** the two distances between the outer joint part (2) and the inner joint part (1) are defined by the distance of the securing element (5) from the pin head (7).

8. Articulated joint according to Claim 7,
**characterized in that**
the securing element (5) is accessible in the interior space of the inner joint part (1) during installation and is subsequently concealed in the functional position of the dérailleur.

9. Articulated joint according to Claim 2,
**characterized in that**,
in order to axially fix the joint pin (4), a correspondingly configured deformation region (12) on the inner joint part (11) is pressed in the direction of the holding contour (11).

10. Articulated joint according to Claim 2,
**characterized in that**,
for the axial fixing of the joint pin (4), an elastic clip element (13) which is connected to the inner joint part (1) latches into the holding contour (11) arranged between the bevel (8) and the clamping contour (6) on the joint pin (4).

11. Articulated joint according to Claim 10,
**characterized in that**
the clip element is integrated in the inner joint part (1) or forms a common component therewith.

## Revendications

1. Joint articulé entre une partie de support ou un élément de changement de vitesse et un élément de parallélogramme d'un dérailleur arrière de bicyclette, constitué d'une partie d'articulation interne (1), d'une partie d'articulation externe (2) et d'un boulon d'articulation (4) reliant celles-ci de manière articulée,
**caractérisé en ce que**
les points de palier sont disposés dans la partie d'articulation externe (2), un point de palier se trouvant dans un trou borgne (9) et l'autre dans un alésage traversant (10) qui est recouvert vers l'extérieur par la tête de boulon (7), et **en ce que** le boulon d'articulation (4) dispose d'un contour de serrage (6) qui garantit une connexion fixée en rotation avec la partie d'articulation interne (1).

2. Joint articulé selon la revendication 1,
**caractérisé en ce que**
le boulon d'articulation (4) est muni à une extrémité d'une tête de boulon (7) et à l'autre extrémité d'un biseautage (8), et dans la région intermédiaire d'un contour de serrage (6) pour la fixation en rotation ainsi que d'un contour de retenue (11) pour la fixation en position axiale, par engagement par correspondance géométrique.

3. Joint articulé selon la revendication 2,
**caractérisé en ce que**
des douilles de palier (3) sont disposées sur les points de palier dans la région des extrémités du boulon d'articulation (4), afin d'obtenir ainsi une distance maximale entre les paliers.

4. Joint articulé selon la revendication 2,
**caractérisé en ce que**
le contour de serrage (6) est disposé sur le boulon d'articulation (4) entre les points de palier de préférence entre la tête de boulon (7) et le contour de retenue (11) et au moyen du contour de serrage (6), une liaison par engagement par force ou par correspondance géométrique est établie entre la partie d'articulation interne (1) et le boulon d'articulation (4).

5. Joint articulé selon la revendication 1,
**caractérisé en ce que**
les points de palier sont munis de douilles de palier (3) qui sont introduites dans le trou borgne (9) et qui sont enfoncées dans l'alésage traversant (10).

6. Joint articulé selon la revendication 5,
**caractérisé en ce que**
les douilles de palier (3) sont recouvertes vers l'extérieur par l'extrémité du trou borgne (9) ou par la tête de boulon (7).

7. Joint articulé selon la revendication 2,
**caractérisé en ce que**
le boulon d'articulation (4) est fixé axialement avec un élément de fixation (5) qui vient en prise dans le contour de retenue (11), l'élément de fixation (5) étant disposé entre deux portions de la partie d'articulation interne (1) et **en ce que** les deux espacements entre la partie d'articulation externe (2) et la partie d'articulation interne (1) sont fixés par la distance entre l'élément de fixation (5) et la tête de boulon (7).

8. Joint articulé selon la revendication 7,
**caractérisé en ce que**
l'élément de fixation (5) est accessible dans l'espace intermédiaire de la partie d'articulation interne (1) pendant le montage et est ensuite recouvert dans la position fonctionnelle du dérailleur de chaîne.

9. Joint articulé selon la revendication 2,
**caractérisé en ce que**
pour la fixation axiale du boulon d'articulation (4), une région de déformation (12) de configuration correspondante est pressée contre la partie d'articulation interne (1) dans la direction du contour de retenue (11).

10. Joint articulé selon la revendication 2,
**caractérisé en ce que**
pour la fixation axiale du boulon d'articulation (4), un élément de pince élastique (13) connecté à la partie d'articulation interne (1) s'encliquète dans le contour de retenue (11) disposé entre le biseautage (8) et le contour de serrage (6) sur le boulon d'articulation (4).

11. Joint articulé selon la revendication 10,
**caractérisé en ce que**
l'élément de pince est intégré dans la partie d'articulation interne (1) ou forme avec celle-ci un composant commun.
